# EUROPEAN PATENT APPLICATION

(11) **EP 0 976 978 A1**
(43) Date of publication of application: **02.02.2000**
(21) Application number: 99902885.5
(22) Date of filing: 12.02.1999
(51) Int. Cl.: F23C 11/00

(54) **COMBUSTION METHOD IN COMBUSTION DEVICE**

(30) Priority: 23.02.1998 JP 5569398
(71) Applicant: Ueno, Shinji, Kumamoto-shi Kumamoto-ken 860-0874 (JP); Nagahiro, Taizo, Nakano-ku, Tokyo 165-0025 (JP)
(72) Inventor: NAGAHIRO, Taizo, Dai7sakae Building, Tokyo 165-0025 (JP)
(74) Representative: Prechtel, Jörg, Dipl.-Phys. Dr.
(86) International application number: JP9900608
(87) International publication number: WO9942762

(57) **Abstract**

A combustion method for a combustion apparatus which mixes hydrogen peroxide for combustion. The method is configured to assure complete combustion at a combustion start time in particular in the combustion apparatus, thereby suppressing production of harmful air pollutants such as carbon monoxide and dioxin.

## Description

### Technical Field

The present invention relates to a combustion method for a combustion apparatus such as a forced-air cooled type or self air suction type boiler, a stove or an incinerator.

### Background Art

It was conventionally impossible to obtain complete combustion in a combustion apparatus, or stable complete combustion at an operation start time in particular, thereby making it difficult to prevent production of smoke and harmful air pollutants such as carbon monoxide gas and dioxin. It is important to prevent production of the harmful air pollutants in particular.

For an internal combustion engine such as a high speed engine for a racing car or a jet engine for a supersonic fighting plane it is conventionally known to use technical means which preliminarily mixes water with a fuel or inject water into a combustion chamber for the purpose of saving the fuel or achieving an ultimate speed.

For an external combustion engine such as a heavy oil boiler which is a representative of combustion apparatus, on the other hand, it is known to preliminarily mix pressurized hot water or water steam with heavy oil and/or inject the pressurized hot water or water steam into a flame for the purpose of preventing heavy oil from being liquefied or producing particles of soot (black smoke) and accelerating complete combustion.

However, the conventional technical means described above which preliminarily mixes water or water steam with the fuel or injecting water steam into the apparatus requires time until a temperature is raised sufficiently in the apparatus at a start time, whereby it is impossible for this time to expect that active radicals such as oxygen having active groups are produced stably thermally dissociated water molecules.

The conventional technical means poses numerous difficult problems related to combustion stability at the combustion start time, that is, problems related to control of a preliminary mixing timing and/or injection timing as well as an amount of water or water steam to be mixed with the fuel and/or injected into the apparatus at an initial time of the combustion, thereby inevitably allowing the harmful air pollutants such as the soot and smoke at a temperature rise period in the apparatus in particular.

A primary object of the present invention is to provide a combustion method which is capable of relatively easily controlling stable complete combustion and does not allow harmful air pollutants such as soot, carbon monoxide gas and dioxin even at an operation start time of combustion apparatus.

### Disclosure of the Invention

The combustion method according to the present invention is characterized in that it is configured not only to supply water but also to mix hydrogen peroxide water for combustion of a fuel or combustion of waste matter together with a fuel in a combustion apparatus, thereby accelerating complete combustion so as to assure stable combustion at a start time in particular and prevent carbon monoxide and harmful air pollutants from being exhausted.

The present invention has been achieved on the basis of a finding of a phenomenon that a temperature was raised with a leap and complete combustion was accelerated in a combustion unit when hydrogen peroxide water was supplied into the combustion unit as means to forcibly accelerate a chain reaction of combustion at an operation start time of a combustion apparatus in a condition where its interior was not heated to a temperature high enough for thermal dissociation of water molecules.

This phenomenon takes place since the hydrogen peroxide supplied into the combustion unit is first dissociated at a relatively low temperature to produce oxygen atoms having active groups, the so-called active oxygen radicals, thereby accelerating the chain reaction of combustion in the combustion unit and inducing dissociation of the water molecules to produce the active radicals such as oxygen atoms having the active groups and hydrogen atoms having active groups. It is assumed that the active radicals successively combine complicatedly with combustible substances such as carbon, hydrogen and hydrocarbon water existing in the combustion unit, thereby providing a result that various kinds of active radicals are produced like a chain, and the combustion in the combustion unit is accelerated at a remarkably high temperature and in a moment to cause complete combustion.

As an auxiliary fuel to be used for the combustion method according to the present invention, hydrogen peroxide water is diluted with water preferably at 0.01 to 10% by weight, more desirably 0.01 to 1% by weight.

Furthermore, oxygen peroxide water is supplied at a ratio of 5% to 140% by weight, more desirably 20 to 70% by weight, of the fuel to a combustion apparatus which carries out the method according to the present invention.

### Brief Description of the Drawings

Fig. 1 is a diagram showing a configuration of a combustion furnace used for combustion experiments;
Fig. 2 is an enlarged view of a combustion unit in the combustion furnace;
Fig. 3 is a diagram showing a configuration of an injector unit of the combustion furnace; and
Fig. 4 is an enlarged view of a carburetor of the combustion furnace.

### Best Mode Embodying the Present Invention

Now, description will be made of the embodiment of the combustion method according to the present invention in comparison with a conventional combustion method.

Referring to the accompanying drawings, description will be made first of a combustion apparatus which was used for combustion experiments conducted as an embodiment of the combustion method according to the present invention.

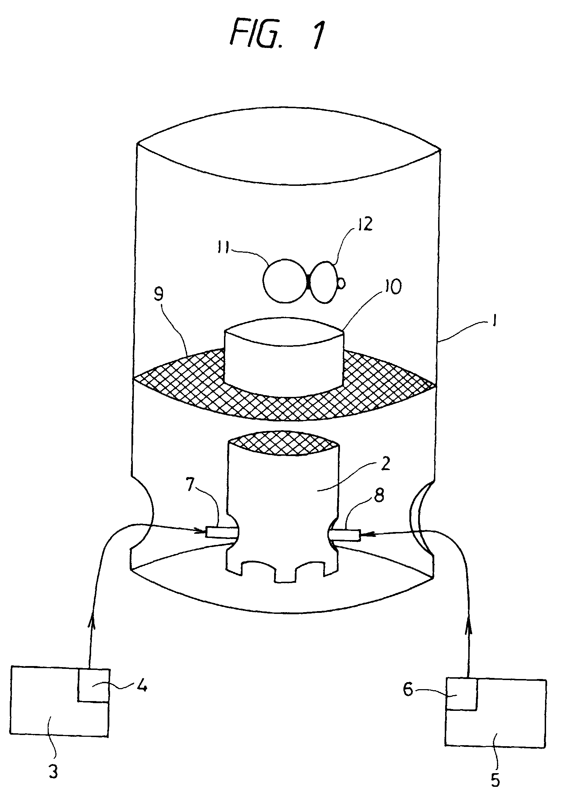

A configuration of a combustion furnace as a whole is shown in Fig. 1, wherein a reference numeral 1 represents a combustion furnace, a reference numeral 2 designates a combustion unit, and a reference numeral 3 denotes an injector which injects kerosene as a fuel and is connected to a carburetor 4. A reference numeral 5 represents a hydrogen peroxide water injector which is connected to a carburetor 6. A reference numeral 7 designates a fuel injecting nozzle, a reference numeral 8 denotes a hydrogen peroxide water injecting nozzle, and a reference numeral 9 represents a tray which is used to reserve a solid combustible substance in the combustion furnace for combustion tests and composed of two stainless steel nets of 10 mesh. A reference numeral 10 designates a combustion cage into which the solid combustible substance is to be thrown. Furthermore, a reference numeral 11 denotes a peep hole formed in a wall surface of the combustion furnace and a reference numeral 12 denotes a lid which is mounted with a hinge 13 so that it can be opened and closed.

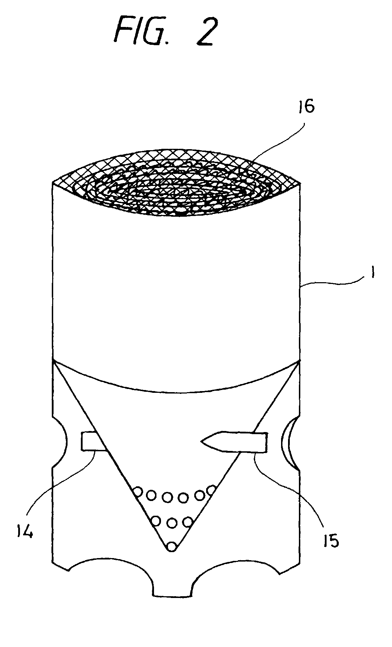

The combustion unit 2 is shown on an enlarged scale in Fig. 2, wherein reference numerals 14 and 15 represent holes into which a fuel injecting nozzle and a hydrogen peroxide water injecting nozzle are to be inserted respectively, and a reference numeral 16 designates a rectifier element.

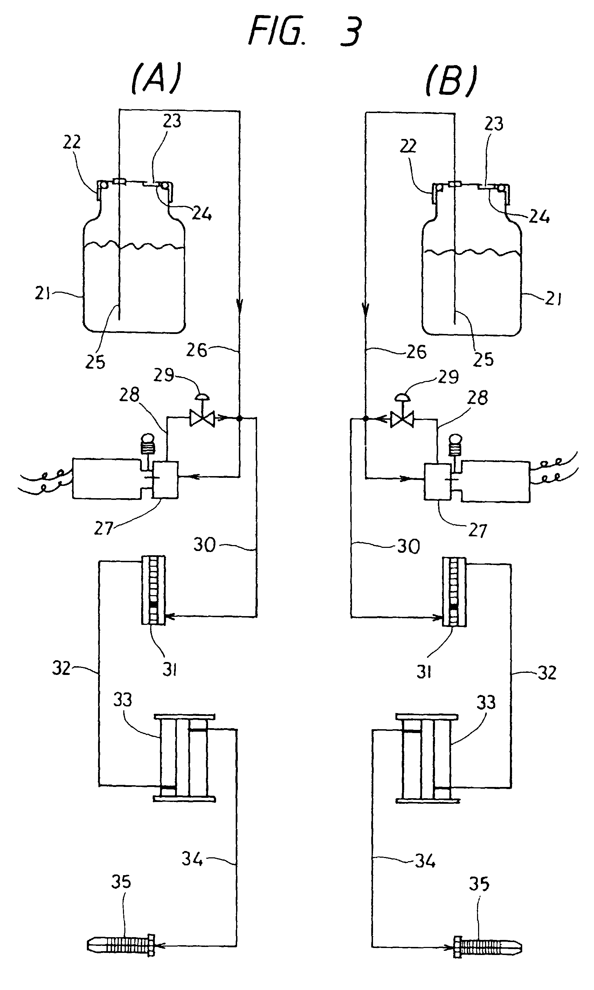

Fig. 3 is a diagram showing a configuration of the injectors. The injectors are used to feed kerosene and hydrogen peroxide which are a fuel and an auxiliary fuel with high efficiencies to the combustion apparatus; (A) being an injector for the fuel and (B) being an injector for the auxiliary fuel.

Since the fuel injector is substantially the same as the auxiliary injector, same parts are represented by same reference numerals in Fig. 3.

In Fig. 3, a reference 21 represents a vessel which has an internal volume of 4 liters and made of polyethylene for reserving kerosene or hydrogen peroxide water, a reference numeral 22 designates a top cover of the polyethylene vessel, a reference numeral 23 denotes a non-woven cloth made of polyester fibers which has air inlet holes having a diameter of 3 mm, a reference numeral 24 represents a cleaning filter for air to be sucked which has an average aperture diameter of 5 µm, and a reference numeral 25 designates an outlet pipe for kerosene or hydrogen peroxide water. An O ring is interposed between the vessel 21 and the cover 22 to maintain these members in airtight conditions. A pair of kerosene vessels, five pairs of vessels for hydrogen peroxide water at different concentrations and a pair of water vessels were manufactured and prepared. A reference numeral 26 represents a conduit for supplying kerosene or hydrogen peroxide water to a pump from the kerosene vessel or the hydrogen peroxide water vessel, a reference numeral 27 designates a pump which sucks kerosene or hydrogen peroxide water and sends it under pressure, a bypass line 28 which bypasses a flow of kerosene or hydrogen peroxide water to a suction side is disposed on a discharge side of the pump 27 and a needle valve 29 for adjusting a bypass flow rate is disposed in the course of the bypass line 28. The discharge side of the pump 27 is connected to a flowmeter 31 by way of a conduit 30, further to a carburetor 33 by way of a conduit 32 and further to an injection nozzle 35 by way of a conduit 34.

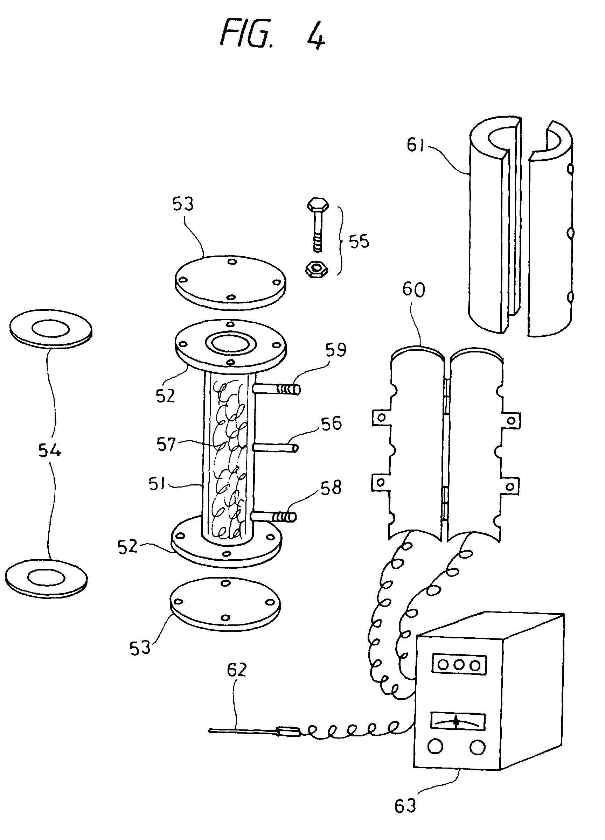

Fig. 4 is an enlarged view illustrating a concrete configuration of the carburetor 33. In Fig. 4, a reference numeral 51 represents a carburetor main body which has a structure wherein flanges 52 are welded to a top end and a bottom end of the carburetor main body, and heat resisting packings 54 are attached to blank flanges 53 and fixed with bolts and unts 55. Furthermore, a protective tube 56 is welded to a middle of the carburetor main body to insert a temperature sensor so that it can measure a temperature at a central portion of the carburetor. Thin cut chips 57 which are like thin ribbons are charged in the carburetor, a liquid feed port 58 is attached to a lower portion of the main body and a liquefied gas exhaust port 59 is attached to an upper portion of the main body. A cylindrical band heater 60 which is divided into two pieces is fixed to a body outside the main body and a surface of the band heater is covered with a heat insulating member 61. A thermocouple 62 is inserted into the protective tube 56 as a temperature sensor, and lead wires from the band heater 60 and the thermocouple 62 are connected to an electronic automatic power controller 63 to maintain a central portion of the charged material 57 at a constant temperature.

As an embodiment of the present invention, combustion tests were conducted using the combustion furnace shown in Fig. 2 as a kerosene combustion apparatus to confirm influences on combustion due to hydrogen peroxide water. Prior to the combustion tests, air was purged from all kerosene lines with nitrogen for security, the electronic automatic power controller 63 connected to the two pairs of carburetors shown in Fig. 4 was set for a temperature of 500°C and a limiting current of 5A, and the carburetors were preheated so that central portions of the carburetors are stabilized at a predetermined temperature of 500°C. Furthermore, the fuel injection pump and the hydrogen peroxide water injection pump shown in Fig. 3 were adjusted to a discharging flow rate of 50 milliliters per minutes by turning diaphragm control knobs. First, the kerosene pump 27 was started in a condition where the bypass valve 29 for the kerosene bypass line 28 was fully open in the fuel injector shown in (A) of Fig. 3, gasified kerosene gas discharged from a top portion of the honeycomb of the rectifier element 16 shown in Fig. 2 was ignited while gradually closing the bypass valve 29 and the bypass valve 29 was controlled while confirming stability of a flame unit a kerosene flowmeter 31 on the fuel injector reads 30 milliliters per minute.

Then, the hydrogen peroxide water pump 27 was started in a condition where the bypass valve 29 for the hydrogen peroxide water bypass line was fully open in the hydrogen peroxide water injector shown in (B) of Fig. 3, the bypass valve was gradually closed until a hydrogen peroxide water flowmeter 33 reads 30 milliliters per minute, and a flame was checked visually and olfactorily for variations of conditions such as odor and soot in an exhaust combustion waste gas and a temperature at a central of the flame was measured.

Simultaneously, concentrations of carbon monoxide in the exhaust combustion gas were analyzed and variations of a degree of complete combustion dependent on mixing ratios of hydrogen peroxide water with kerosene fuel were observed. The exhaust combustion tests were conducted by preparing five pairs of polyethylene vessels 21 filled with the hydrogen peroxide water at the five concentrations shown in Fig. 3 and exchanging the vessels with one another. Two comparative tests were conducted as comparative examples by preparing a pair of polyethylene vessels filled only with water, and supplying only water and burning only kerosene.

Test results are summarized in Table 1 below:

**Table 1**

| Embodiment | | | | | | | Comparative Examples | |
|---|---|---|---|---|---|---|---|---|
| A | 0.001 | 0.01 | 0.1 | 1.0 | 10.0 | 20.0 | Only water | No hydrogen peroxide |
| B | 77 | 56 | 42 | 25 | 18 | 15 | 290 | 1260 |
| D1 | 1180 | 1250 | 1260 | 1420 | 1530 | 1560 | 1060 | 750 |
| D2 | None | None | None | None | None | None | None | Present |
| D3 | None | None | None | None | None | None | Slight odor | Odor of kerosene |

In Table 1, line (A) lists concentrations of supplied hydrogen peroxide water (wt%), line (B) lists carbon monoxide in the exhaust gas (ppm), and lines (D1), (D2) and (D3) list observation results: D1 being measured flame temperatures, D2 being soot in the exhaust gas and D3 being odor of the exhaust gas.

As shown in Table 1, amounts of carbon monoxide in the exhaust gas are extremely smaller than those produced when only water is injected or when no substance is injected. Furthermore, the method according to the present invention provides a flame temperature higher than those in the comparative examples.

As apparent from Table 1, an amount of carbon monoxide and a flame temperature are smaller and higher as a concentration of hydrogen peroxide water is higher. However, too high concentrations of hydrogen peroxide water are not preferable from a viewpoint of a combustion cost since hydrogen peroxide water is consumed at higher rates and its effect is not enhanced at lower tendencies at such too high concentrations.

Taking these facts into consideration, it is preferable to use hydrogen peroxide water at a concentration of 0.01 to 10.0% by weight. As seen from Table 1, an amount of carbon monoxide is reduced rather unsatisfactorily in the exhaust gas when hydrogen peroxide is at a concentration lower than 0.01% by weight. When hydrogen peroxide water is at a concentration of 10.0% or higher by weight, in contrast, carbon monoxide is reduced in the exhaust gas is reduced at a ratio which is low for an enhancement of its feed rate and the high concentration reversely enhance a combustion cost.

As a second embodiment of the present invention, combustion tests were conducted using the combustion apparatus shown in Fig. 1 to confirm influences on combustion due to hydrogen peroxide water.

The second embodiment is experiments of combustion which were conducted by injecting a solid combustible substance as a fuel.

First, the tray 10 shown in fig. 1 was fixed in a combustion furnace, and 300g of a prepared mixture of crushed chips of a vinyl chloride resin bottles and pet resin bottles was placed as solid combustible substance on the tray 10. Then, gasified kerosene gas discharged from the top portion of the honeycomb of the rectifier element 16 of the combustion unit shown in Fig. 2 was ignited in the procedures quite the same as those in the first embodiment described above and the bypass valve 29 was adjusted while confirming stability of a flame until the kerosene flowmeter 31 of the kerosene injector shown in (A) of Fig. 3 read 30 milliliters per minute.

Simultaneously, ignition of the solid combustible substance placed in the combustion cage 10 shown in Fig. 2 was confirmed, the hydrogen peroxide water pump 27 was started in a condition where the bypass valve 29 was fully open on the hydrogen peroxide water bypass line of the hydrogen peroxide water injector shown in (B) of Fig. 3, the kerosene bypass valve 29 was filly opened while gradually closing the bypass valve 29 and visually checking a flame over the combustion unit for its variations, and the kerosene pump 27 was stopped to stop supplying kerosene.

After confirming the solid combustible substance placed in the tray 10 shown in Fig. 2 was stably burning in this condition, the hydrogen peroxide water valve 29 shown in Fig. 3 was fully opened once again, the hydrogen peroxide water flowmeter 31 was adjusted to read 30 millilitres per minute while gradually closing the bypass valve 29 once again, a flame was visually checked for conditional variations such as odor and soot in a combustion exhaust gas, and combustion temperature in a central portion of the flame was measured.

Simultaneously, concentrations of carbon monoxide and dioxin in the combustion exhaust gas were analyzed, and variations of a complete combustion degree dependent on mixing ratios between reproduced plastic chips containing vinyl chloride resin and hydrogen peroxide water were observed. The combustion tests were conducted by preparing five pairs of polyethylene vessels 21 filled with oxygen peroxide at five concentrations shown in Fig. 3 and exchanging these vessels with one another. In addition, two comparative tests were conducted by preparing a pair of polyethylene vessels filled only with water, and burning only water and only the reproduced plastic chips.

Test results are summarized in Table 2 below;

**Table 2**

| Embodiment | | | | | | | Comparative Example | |
|---|---|---|---|---|---|---|---|---|
| A | 0.001 | 0.01 | 0.1 | 1.0 | 10.0 | 20.0 | Only water | No hydrogen peroxide |
| B | 158 | 98 | 45 | 36 | 27 | 25 | 1320 | 2550 |
| c | 24 | 5.1 | 1.4 | 0.4 | 0.6 | 0.5 | 62 | 1880 |
| D1 | 1100 | 1220 | 1310 | 1350 | 1430 | 1470 | 950 | 670 |
| D2 | None | None | None | None | None | None | None | Present |
| D3 | Slight odor | None | None | None | None | None | Slight odor | Odor of hydrochloric acid |

In Table 2, line C indicates an amount of dioxin contained in an exhaust gas, whereas lines A, B, D1, D2 and D3 indicate items which are the same as those on the corresponding lines in Table 2.

From the test results summarized in Table 2, it is desirable that hydrogen peroxide water is at a concentration of 0.01 to 10.0% by height. That is, this concentration within this range is desirable from a viewpoint of an amount of carbon monoxide contained in the exhaust gas as already described with reference to Table 1. Furthermore, dioxin is produced in a smaller amount as hydrogen peroxide water is at a higher concentration as seen from Table 2. A production amount of dioxin is reduced abruptly when a concentration of hydrogen peroxide water exceeds 0.01% by weight. When the concentration of hydrogen peroxide water exceeds 10.0% by weight, however, a tendency to reduce a production amount of dioxin is not changed so remarkably or an effect is scarcely enhanced as a concentration of hydrogen peroxide is enhanced. Inversely, such a high concentration of hydrogen peroxide water is not preferable from the viewpoint of combustion cost as described above. It is desirable also from Table 2 that hydrogen peroxide water is at the concentration of 0.01 to 10.0% by weight.

In the first embodiment and the second embodiment described above, hydrogen peroxide water is supplied at a ratio of about 59% of the fuel. It is preferable that this ratio is 4% to 140%. If the ratio is 4% or lower, it will be impossible to obtain a sufficient effect of the present invention. If the ratio exceeds 140% and a large amount of diluted hydrogen peroxide water is supplied, combustion may not take place due to too large an amount of water contained in the hydrogen peroxide water.

Furthermore, it is most desirable that hydrogen peroxide water is supplied at a ratio of 20% to 70% by weight of the fuel. Hydrogen peroxide at a ratio of 20% by weight or lower will provide an effect which is at a certain degree but more or less insufficient. Hydrogen peroxide water at a ratio exceeding 70% by weight has too large a water content and is not preferable.

### Industrial Applicable Possibility

The combustion method according to the present invention makes it possible to prevent harmful substances such as soot, carbon monoxide and dioxin from being exhausted due to incomplete combustion, and stably control combustion even at a combustion start time by supplying hydrogen peroxide into a flame during combustion in a combustion apparatus such as forced blast type or self air suction type boiler, a stove or an incinerator.

## Claims

1. A combustion method characterized in that hydrogen peroxide water is supplied in addition to air, mixed and burnt together with waste matters in a combustion apparatus.

2. The combustion method according to claim 1 characterized in that said hydrogen peroxide water is supplied at a concentration not exceeding 10.0% by weight.

3. The combustion method according to claim 1 characterized in that said hydrogen peroxide is 0.01 to 10.0% by weight.

4. The combustion method according to claim 1, 2 or 3 characterized in that said hydrogen peroxide is injected into a flame.

5. The combustion method according to claim 1, 2, 3 or 4 characterized in that hydrogen peroxide diluted with water is supplied at a rate of 5% to 140% by weight of the fuel.

6. The combustion method according to claim 1, 2, 3 or 4 characterized in that hydrogen peroxide diluted with water is supplied at a rate of 20 to 70% by weight of the fuel.
